# EUROPEAN PATENT SPECIFICATION

(11) **EP 0 507 397 B1**
(45) Date of publication and mention of the grant of the patent: **01.07.1998**
(21) Application number: 92200893.3
(22) Date of filing: 30.03.1992
(51) Int. Cl.: G11B 27/10, G11B 27/32, G11B 20/12, G11B 20/10, G11B 27/034, G11B 27/30, G11B 27/22

(54) **Method and device for recording information volumes in a track of a record carrier, and a device for reading the record carrier thus obtained**
Verfahren und Anordnung zum Aufzeichnen von Informationsteilen in einer Spur eines Aufzeichnungsträgers sowie Einrichtung zum Auslesen eines auf diese Weise erhaltenen Aufzeichnungsträgers
Méthode et dispositif pour l'enregistrement des volumes d'information sur une piste d'un support d'enregistrement et dispositif pour la lecture du support d'enregistrement obtenu de cette manière

(30) Priority: 02.04.1991 EP 91200764; 26.04.1991 EP 91201005
(43) Date of publication of application: 07.10.1992
(73) Proprietor: Philips Electronics N.V., 5621 BA Eindhoven (NL)
(72) Inventor: Dieleman, Adrianus Huibrecht, NL-5656 AA Eindhoven (NL); Schepers, Jos Gustaaf, NL-5656 AA Eindhoven (NL); Westerhout, Gerrit Damejanus, NL-5656 AA Eindhoven (NL)
(74) Representative: Groenendaal, Antonius Wilhelmus Maria

(56) References cited:
- EP-A- 0 184 195
- EP-A- 0 325 330
- EP-A- 0 382 154
- EP-A- 0 390 268
- WO-A-80/01328
- DE-A- 3 621 263
- DE-A- 3 820 590
- US-A- 4 775 969
- US-A- 4 847 708
- PATENT ABSTRACTS OF JAPAN vol. 14, no. 484 (P-1120) 22 October 1990 & JP-A-02 195 586 (SHINANO KENSHI K.K.) 2 August 1990
- PATENT ABSTRACTS OF JAPAN vol. 15, no. 24 (P-1156) 21 January 1991 & JP-A-02 267 618 (NEC ENG. LTD.) 1 November 1990
- PATENT ABSTRACTS OF JAPAN vol. 15, no. 266 (P-1223) 5 July 1991 & JP-A-03 086 975 (VICTOR CO OF JAPAN LTD.) 11 April 1991

## Description

The invention relates to a method of recording information in a partly recorded track on a record carrier of an inscribable type on which the information is to be arranged in an information volume comprising control information on a predetermined position relative to the start of the information volume for controlling the reading operation of the recorded information and a lead-out signal denoting the end of the information volume.

The invention likewise relates to a device for recording information in a partly recorded track of a record carrier of an inscribable type on which the information is to be arranged in an information volume comprising control information on a predetermined position relative to the start of the information volume for controlling the reading operation of the recorded information and a lead-out signal denoting the end of the information volume, which device has an input for receiving information signals, comprises lead-out signal generating means for generating the lead-out signal and recording means for realizing a recording of the information signal and the lead-out signal.

The invention further relates to a device for reading a record carrier of a type on which information is arranged in an information volume comprising control information on a predetermined position relative to the start of the information volume and a lead-out signal denoting the end of the information volume, which device comprises locating means for locating the start of the information volume, reading means for reading information recorded in the track and control means for controlling the reading operation on the basis of the control information.

The invention further relates to a record carrier on which an information volume has been recorded in a track, which information volume comprises control information on a predetermined position relative to the start of the information volume for controlling the reading operation of the recorded information and a lead-out signal denoting the end of the information volume.

The aforementioned method and devices are known, for example, from European patent specification EP-A-0390 268. Said patent specification describes a method and devices with which information can be recorded and read out from a CD of a write-once type.

Such a CD is also termed CD-WO (Compact Disc Write Once). A CD-WO is highly suitable for recording digitized picture information coming from slides or photo negatives. The recording of these digitized pictures is known, for example, as the PHOTO-CD SYSTEM. The PHOTO-CD obtained with this method can be read out, for example, with the prior-art CD-ROM-XA and CD-I players and with reading equipment specially developed for the PHOTO-CD. A PHOTO-CD can accommodate the pictures of a number of photo or slide films. When these films are recorded, there will generally not be sufficient negatives or slides available to fill a PHOTO-CD completely, but usually only negatives or slides of a single photo film or slide film will be available at one time. Therefore, there is a need for a recording method according to which the information can each time be supplemented in a simple manner by entering a number of pictures on the PHOTO-CD and according to which the recorded information can be read out rapidly and selectively after each supplement on the PHOTO-CD.

It is to be noted, that from WO 80/01328 a method of incrementally recording data on an optical disc without track structure in annular bands of tracks is known. The bands are physically separated by gaps, which have no contents at all. Each band has directory information for accessing user data in the respective band, which directory can be located by locating address information on a predetermined position relative to an end-of-band signal.

It is an object of the invention, for example, to provide means which allow incremental recording on a partly recorded record carrier, which is already provided with information arranged according to an already existing format in such a manner that the readout of the recorded information can be done fast and simple. With respect to the method this object is achieved as set out in claim 1.

With respect to the recording device this object is achieved as set out in claim 6.

With respect to the reading device this object is achieved as set out in claim 9.

With respect to the record carrier this object is achieved as set out in claim 11.

With the recording method and device always the pictures of a newly available collection of negatives or slides can be supplemented to the record carrier as a newly recorded information volume. The control information essential to the control of the reading operation of the recorded information can be searched on the basis of the control information available in the lead-out signal of the information volume recorded last. This lead-out signal is always located right before the beginning of the still unrecorded part of the record carrier and can thus be found back more rapidly, for example, by detecting the transition from a recorded track section to an unrecorded track section. It is possible that the information essential to the read-out control is partly or completely included in the lead-out signal. Alternatively, it is possible to include the essential control information in one or more separate control files in another section of the information volume and then include a reference to this (these) control file(s) in the lead-out signal.

Though not imperative, it is to be preferred to include all the control information about the previously recorded information volumes in the information volume recorded last, because then the control information essential for reading all the recorded information will be available.

The lead-out signal at the end of the last recorded information volume can be found back in a rapid and simple manner by detection of the transition from the track part that contains information to the track part that is still empty. For disc-shaped record carriers of the CD-WO type this can be effected in an extremely simple manner by detecting the presence of a high-frequency signal component in the read-out signal during a radial displacement of a read/write head.

When information is recorded according to the invention, the information volumes, with the exception of the lead-out signal, can be recorded entirely in accordance with the CD-ROM-XA and CD-I standards already used. The address information in the lead-out signal is preferably recorded in the subcode Q-channel in a mode differing from the mode prescribed in the standard. In that case, reading the CD-WO obtained by implementing this method does not form any problem. For that matter, this mode of the subcode Q-channel is not recognized by this equipment and therefore discarded. The control information included in the lead-out signal will not be recognized. However, according to the CD-ROM-XA and CD-I standard the necessary control information is also recorded in other sections of the information volumes. With the prior-art reading equipment the access to the address and other control information in the signal parts recorded second cannot be realized as rapidly as with the reading device according to the invention, because then track parts are to be searched for of which no address is available at a place that can be found back as easily as according to the invention, at the end of the part recorded last on the CD.

It should be observed that the invention is especially suitable for recording CD signals on a CD-WO, for example, signals assembled according to the CD-ROM XA or CD-I standard. Alternatively, however, the invention is suitable for use in other recording and reading systems with which the user always wishes to record supplements on a record carrier that is already partly filled.

Further embodiments as well as their advantages will be described in detail with reference to the Figures 1 to 15, in which:
Figure 1 shows a first embodiment of the recording device according to the invention;
Figures 2, 6, 12, 13, 14 and 15 show flow charts of control programs executed by control devices in embodiments of the devices according to the invention;
Figures 3, 8 and 10 show layouts of a track of a record carrier inscribed with a method according to the invention;
Figure 4 shows an embodiment of a reading device according to the invention;
Figure 5 shows an embodiment of a detection circuit to be used in the device shown in Figure 4;
Figure 7 shows an embodiment of a recording-reading device according to the invention;
Figure 9 shows in a diagram the format of a subcode frame of a CD signal; Figure 11 shows an embodiment of a PHOTO-CD system in which the invention is used;
Figs. 16 to 18 show a CD-ROM reading apparatus according to the state of the art;
Figs. 19 and 21 show record carriers obtained with a method according to the invention;
Figs. 20 and 22 show flow charts of programs executed by the embodiments for a reading apparatus according to the invention;
Fig. 23 shows an embodiment for a recording apparatus according to the invention;
Figs. 24, 25, 26, 28 and 29 show flow charts of programs executed by the recording apparatus according to the invention; and
Figs. 27a to 27d show by way of illustration the layout of the record carrier during successive stages of an embodiment for the method according to the invention.

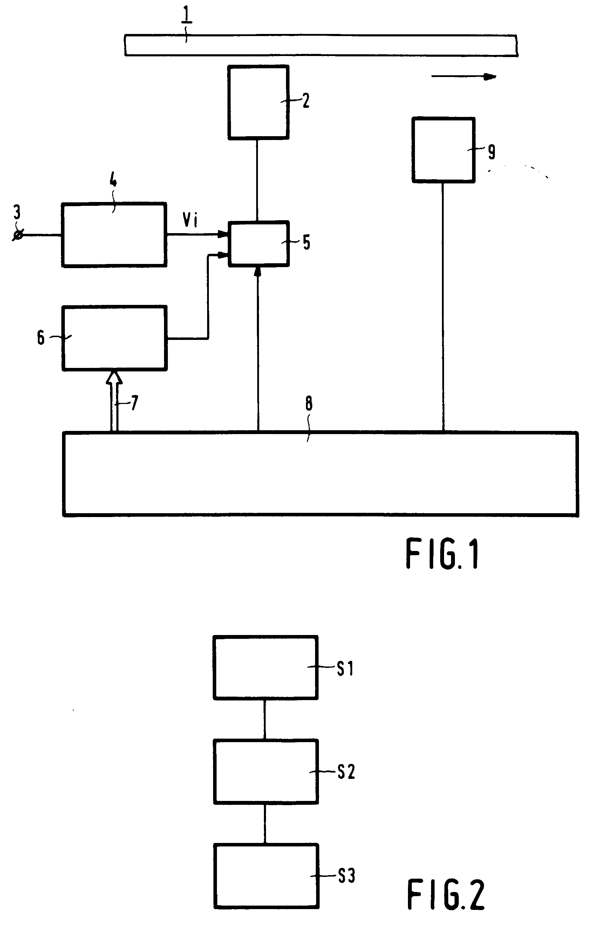

Figure 1 shows a first embodiment of a recording device according to the invention. A record carrier of an inscribable type, for example, a magnetic or optical, tape or disc-shaped record carrier is denoted by the reference numeral 1. The record carrier 1 is moved relative to write head 2 with drive means which are customary *per se* and not represented in Figure 1. The recording device comprises an input terminal 3 for receiving the information to be recorded. The input terminal 3 is coupled to an input stage 4 which converts the received information into a signal Vi suitable for recording. The signal Vi is applied through a first input of a multiplex circuit 5 to an input of the write head 2. A second input of the multiplex circuit 5 is coupled to a signal generator 6 for generating a lead-out signal which has a format distinguishable from the information signal Vi. The multiplex circuit 5 is of a type that passes the lead-out signal produced by the signal generator 6 or the information signal Vi to the write head 2 in response to a control signal at a control input. In response to the passed signal the write head 2 provides an information pattern representing the passed signal in a track of the record carrier.

The signal generator 6 is of a type by which additional information can be inserted in the lead-out signal. This additional information can be applied to the signal generator 6 over a bus 7.

The recording device comprises a detection unit 9 of a type capable of detecting the beginning of an unrecorded part of the record carrier. Such a detection unit 9 may comprise, for example, an address detector detecting an address which denotes the position of the write head 2 relative to the record carrier 1. This address can be compared with a reference address that denotes where the previous recording was terminated. The detection unit 9, however, may also comprise a read head mechanically coupled to the write head 2 or included in the write head 2 and which can be used for detecting whether an information pattern has been recorded in the track. In that event, the beginning of a still unrecorded part of the track can be established by displacing the read head relative to the record carrier 1 and, at the same time, detecting whether information is available in the record carrier section detected by the read head.

The recording device further includes a control unit 8 for controlling the recording operation, for which purpose the control unit is coupled, for example, to the bus 7 and the control input of the multiplex circuit 5.

The control unit 8 may be of a program controlled type containing a suitable control program. In the embodiment of the recording device according to the invention the control program is to comprise a subprogram which effects the recording of the lead-out signal denoting the end of a set of information files belonging together recorded in a single recording session, each time after a set of information files has been recorded. (The above set of files that belong together will henceforth be denoted an information volume). Furthermore, the control program is to comprise a subprogram that supplies control information to the signal generator 6 over the bus 7, for recording the lead-out signal. This control information may contain a Table of Contents denoting all the addresses of the recorded files in the recorded information volumes. Alternatively, it is possible for an information volume to comprise one or more control files containing information of the contents of the recorded files. In that case the control information extended to the lead-out signal over bus 7 may contain the addresses of these control files.

Figure 2 shows a flow chart of a suitable control program. This program comprises a first step S1 at which the beginning of the unrecorded part of the track is searched for. At step S2 are recorded the files of the information volume to be recorded and also control files containing control information relating to files already recorded. Subsequently, when step S3 is executed, the necessary control information is applied to the signal generator over bus 7 and the multiplex circuit 5 is activated so that the lead-out signal is applied to the write head.

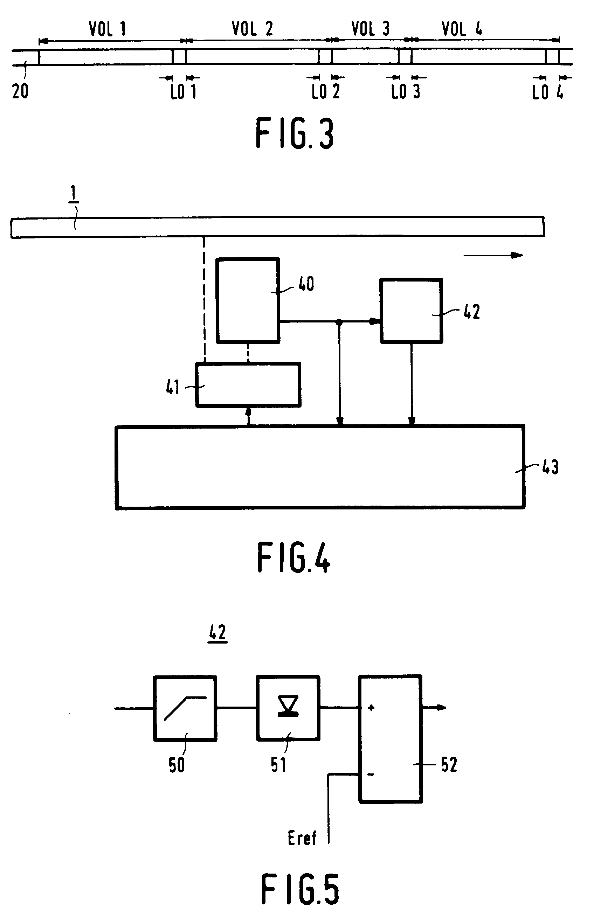

Figure 3 diagrammatically shows the track in which the information volumes are recorded under the control of the above described control program. The track is denoted by the reference numeral 20. The information volumes are referenced VOL1, VOL2, VOL3 and VOL4. The lead-out signals included in these information volumes at the ends thereof, are referenced LO1, LO2, LO3 and LO4.

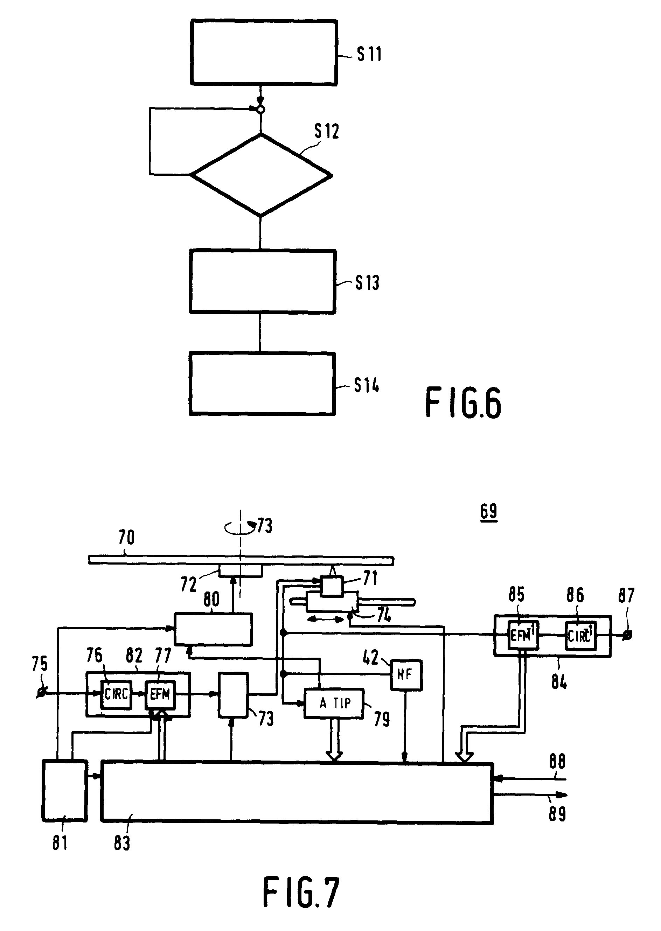

Figure 4 shows an embodiment of the reading device according to the invention for reading the record carrier 1. The reading device comprises a read head 40. The read head 40 and record carrier 1 can be displaced relative to each other by means of a drive unit 41 of a customary type. The reading device comprises a detection unit for detecting the beginning of a still unrecorded part of the track. This detection unit may be of the same type as the detection unit 9 of the recording device described above. The detection unit of the represented reading device comprises a detection circuit 42 whose input is coupled to an output of the read head 40 for receiving the signal produced by the read head 40 which signal corresponds to the section of the record carrier detected by the read head. Figure 5 shows by way of example an embodiment of the detection circuit 42 which comprises a high-pass filter 50 of which an input is coupled to the read head 40 for receiving the signal detected by this read head 40. An output of the high-pass filter 50 is coupled to a rectifier circuit 51. An output of the rectifier circuit 51 is coupled to a comparing circuit 52 for comparing the signal produced by the rectifier circuit 51 with a reference value Eref. In the presence of an information pattern in the part of the record carrier detected by the read head 40 the signal supplied by the read head 40 will comprise a high-frequency component which is passed by the high-pass filter 50 and then rectified in rectifier circuit 51. If an information pattern is present, the output signal of the rectifier circuit 51 will comprise a relatively large dc voltage component exceeding Eref and the comparing circuit 52 will produce a signal denoting that the output signal of the read head comprises a high-frequency component and thus denoting that information has been recorded in the detected section of the record carrier 1.

The output signal of the detection circuit 42 is applied to a control unit 43 of the reading device. The control unit 43 is further coupled to an input of the drive unit 41 *via* an output and to an output of the read head 40 *via* an input. The control unit 43 may be of a program controlled type, e.g. a microcomputer containing a suitable control program. A flow chart of an embodiment of a suitable control program is represented in Figure 6. This program comprises a step S11 at which drive unit 41 moves the read head 40 from the beginning of the track along the record carrier 1 under the control of the control unit 43. At step S12 there is a detected in response to the output signal of the detection circuit 42 whether information is recorded in the section of the record carrier 1 scanned by the read head 40. Once the output signal of the detection circuit 42 denotes that no information has been recorded in the detected section, the displacement of the read head 40 is stopped, the head is moved in the opposite direction to about the beginning of the track section in which the lead-out signal is recorded that denotes the end of the last recorded information volume. Subsequently, when step S13 is carried out, the lead-out signal is read out and the control information contained in this lead-out signal is stored in a memory of the control unit 43. Step S14 is a program step at which selected parts of the information volumes are read out in response to the read out control information which contains either information about the contents or refers to a file of content information. The detecting and reading operations described hereinbefore are advantageous in that each time an information volume is supplemented to the record carrier, control information for reading selected parts of information volumes can be found back and read out in a simple manner. The invention is extremely suitable for use to record information on write-once type of record carriers because it is not possible then to re-write control information customarily recorded at the beginning of the track. The invention is especially advantageous when used for disc-shaped record carriers because then by merely displacing the read head in radial direction the beginning of the unrecorded part of the record carrier can be found back extremely rapidly on the basis of the high-frequency component in the signal that has been read out.

The use of the invention is especially important to the PHOTO-CD system in which digitized pictures coming from photo negatives or slides are recorded on an optical record carrier of a so-called CD-WO type. Each time a photo film or slide film is developed, the picture information on the developed photo negatives or slides may then be supplemented to the record carrier, while all the recorded pictures belonging to the same film can then be included in one and the same information volume. By including the control information in the lead-out signal, the control information necessary for selective detection can be found back on the record carrier in a rapid manner when the lead-out signal is detected.

Hereinafter, with reference to the Figures 7 to 15, a detailed embodiment of the recording-reading device to be used in a PHOTO-CD system will be given.

Figure 7 shows an embodiment of a recording-reading device 69 according to the invention suitable for recording CD-I, CD-ROM XA and PHOTO-CD signals. In this drawing Figure reference numeral 70 denotes an optical write-once record carrier of the CD-WO type. Such a record carrier is described in detail in patent applications NL-A-8700655 (PHN 12.063), NL-A-8800152 (PHN 12.399), and NL-A-8801275 (PHN 12.571) and NL-A-8901145 (PHN 12.925).
The record carrier described in these patent applications comprises a spiral-shaped track which presents a periodical track modulation, whose frequency corresponds to a position information signal modulated in the form of an absolute time code signal. The optical recording and/or reading device 69 shown in Figure 7 comprises a drive motor 72 for driving the record carrier 70 in a rotating manner around a spindle 73. An optical read/write head 71 of a customary type is positioned opposite the rotating record carrier 70. The optical read/write head 71 can be displaced in radial direction by means of a radial displacing unit 74 which comprises, for example, a linear motor or a spindle drive system. Information formatted according to the PHOTO-CD format, is presented at an input 75. The PHOTO-CD format is described, for example, in patent application NL-A-9002108 (PHN 13.466). The information presented at the input is applied to an input stage 82 which rearranges the received information with the aid of a customary CIRC encoder 76 and has redundant information for error correction and then converts the signal by means of a customary EFM modulator 77 into an EFM modulated signal. The EFM modulated signal is applied to a laser control circuit converting the EFM modulated signal into a suitable control signal for a write laser used in the read/write head 71. A suitable embodiment of such a control circuit 73 is described in detail, for example, in patent application NL-A-8800223 (PHQ 88.006). An output stage 84 for recovering and supplying information that has been read out is inserted between an output of the read-write head 71 and an output terminal 87. For the information recovery the output stage comprises an EFM demodulator 85 and CIRC decoder 86 customary for this information. An ATIP detector 79 of a customary type, which is described, for example, in aforementioned patent application NL-A-8800152 (PHN 12.399) is also coupled to an output of the read/write head. Such an ATIP detector recovers the absolute time code represented by the FM modulated track modulation in the detected section of the track from the signals read out by the read/write head. Furthermore, the ATIP detector 79 produces a speed signal having a frequency corresponding to the speed with which the record carrier 70 is detected by the read/write head 71. This speed signal is applied to a motor control circuit 80 to which furthermore a clock signal having a reference frequency and produced by a clock generator 81 is applied. The motor control circuit is of a customary type which controls the driving of motor 72 in such a way that the frequency of the speed signal in essence remains equal to the frequency of the reference clock signal. Such a motor control circuit 80 may comprise, for example, a so-called PLL motor speed control circuit with which the motor is driven in response to the phase difference between the speed signal and the reference clock signal.

The device shown in Figure 7 further includes a detection circuit 42 of a type shown, for example, in Figure 5 for detecting a high-frequency signal component in a read-out signal produced by the read/write head when the beginning of the unrecorded section of the track is searched for.

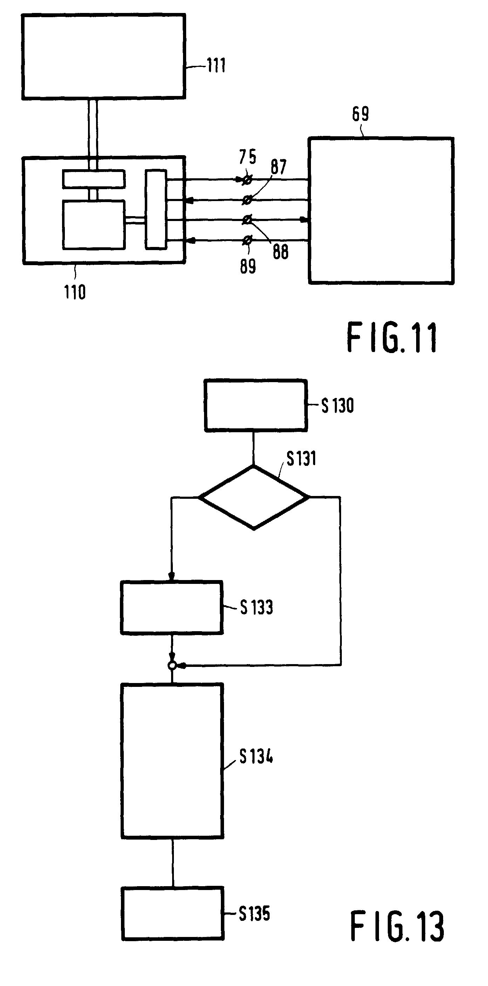

For realizing synchronization of the production of the EFM modulated signal by the input stage 82, outputs of the clock signal generator 81 are also coupled to clock inputs of the CIRC encoder 76 and EFM modulator 77. Finally, the device shown in Figure 7 comprises a control unit 83 for controlling the recording and reading operations. For applying subcode information to the EFM modulator 77 the control unit 83 is coupled to subcode inputs of the EFM modulator 77. For receiving subcode information from the read-out signal the control unit 83 is coupled to subcode outputs of the EFM demodulator. For obtaining the absolute time codes produced by the ATIP decoder 79 the control unit is coupled to outputs of the ATIP decoder 79. For controlling the radial displacement of the read/write head, the control unit 83 is coupled to the radial displacing unit 74. Furthermore, for setting the device to the read or write mode, the control unit 83 is coupled to the control circuit 78. In addition, the device 69 includes a control input 88 and a control output 89 which are coupled to the control unit 83. The control inputs 88 and control output 89 are used for receiving and delivering control commands for executing reading and recording commands given to the device 69 by an external control unit. Such an external control unit may comprise a picture processor for converting digitized picture information into data files formatted in accordance with the PHOTO-CD format. For a detailed description of such a control unit reference is made to aforementioned patent application NL-A-9002108 (PHN 13.466). By way of illustration, however, Figure 11 shows a diagram of a PHOTO-CD system in which such an external control unit is denoted by reference 110. The control unit comprises a microcomputer coupled *via* customary interface circuits to the inputs 75 and 88 and the outputs 87 and 89 of the recording-reading device 69. The control unit 110 is further coupled to a detection device 111 for detecting and digitizing the picture information to be recorded.

The control unit 110 may comprise a microcomputer which is filled with a suitable control program. However, before the control program will be described in detail, a number of different manners in which the control information can be included in the lead-out signal will be described.

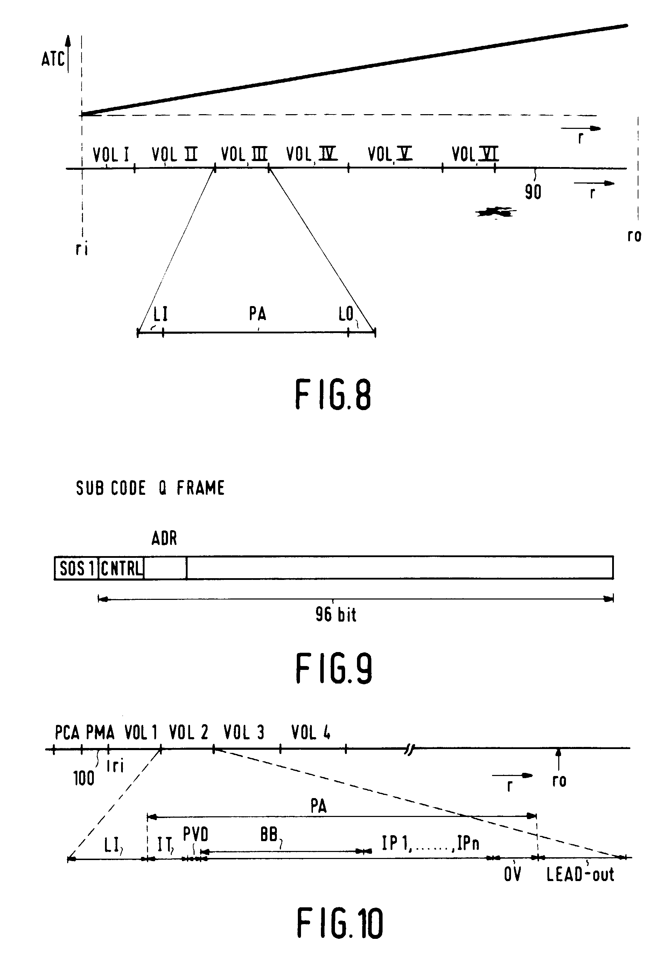

For a description of a first option, reference is made to drawing Figure 8. In this drawing Figure the spiral-shaped track of the record carrier is diagrammatically shown as an elongated track 90. Furthermore, the absolute time code ATC to be included in the subcode Q-channel of the recorded information is plotted in Figure 8 against the radial position r on the record carrier. The beginning of the track 90 is denoted ri and the end of the track is denoted ro. The information volumes recorded in the track 90 in successive recording sessions are denoted VOL 1, ..., VOL VI. Each information volume comprises a lead-in area LI in which a lead-in signal is recorded. The lead-in signal comprises a so-called Table of Contents which indicates in a manner prescribed by the CD standard the initial addresses of the files in the data area of the relevant information volume by way of absolute time codes. For a more detailed description of a suitable format of the Table of Contents, reference be made to patent application NL-A-9002490 (PHN 13.503). The lead-in area LI is followed by a program area PA in which data files are recorded. The program area is followed by a lead-out area in which a lead-out signal is recorded which is distinguishable from the files recorded in the program area and thus denotes the end of the information volume. The lead-out signal is distinguishable from the other recorded information by an alternating bit pattern (having a frequency of 2 Hz) in the subcode P-channel. In the lead-out signal the Table of Contents of all previously recorded information volumes can be included in the subcode Q-channel as control information. This implies that the lead-out signal of the information volume VOL VI comprises the Table of Contents of the information volumes VOL I, ..., VOL VI. The lead-out signal of the information volume VOL V comprises all Tables of Contents of the information volumes VOL I, ..., VOL V.

The Table of Contents in the lead-out signal of each new information volume to be recorded thus comprises the Table of Contents of the lead-out signal of the previous information volume plus the Table of Contents of the newly recorded information volume. The Table of Contents is preferably included in the subcode Q-channel of the lead-out signal in a mode, for example mode 5, which is not recognizable by already existing CD detection systems. The mode of the subcode Q-channel is indicated in each subcode Q frame by means of the so-called bitgroup CNTRL and ADR situated at the beginning of each subcode frame (see Figure 9).

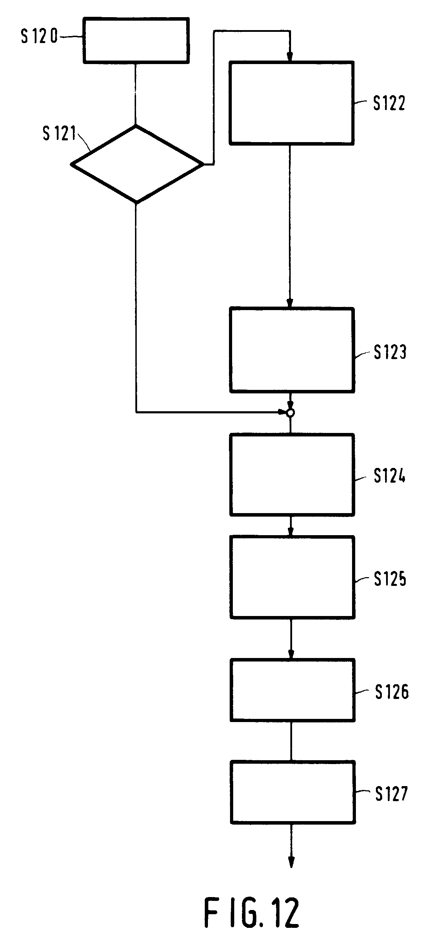

Figure 12 shows for the afore-described signal format a flow chart of an embodiment of a suitable control program for the control unit 83. At step S120 of this program the read/write head 71 is sent in customary fashion to the beginning of the track on the record carrier 70 which beginning is meant for the recording of the Table of Contents of the first information volume. Then, at step 121, it is established on the basis of a Table of Contents, if available, whether the record carrier concerned is still fully unrecorded or already contains one or a plurality of recorded information volumes. When recorded information volumes are detected, step S121 is followed by step S122 at which in a similar manner as in the program described with reference to Figure 6 the lead-out signal of the information volume recorded last is searched for. When so doing, the beginning of the still unrecorded part of the track is detected on the basis of the high-frequency contents of the signal that has been read out. It should be observed, however, that the beginning of the unrecorded part of the track can also be searched for in different manners. For example, it is possible to search for the end of the first information volume on the basis of the Table of Contents of the information volume recorded first. For that matter, the address of the lead-out signal of an information volume is included in the Table of Contents. Subsequently, on the basis of the Table of Contents of the second recorded information volume directly after the lead-out signal of the first information volume, the end of the second information volume can be searched for. This procedure can be continued until the end of the last recorded information volume has been found.

Alternatively, it is possible to store the address of the lead-out signal in a memory or at a fixed location on the record carrier, for example, in an area destined for this purpose, which area is situated ahead of the lead-in area of the first information volume in the track after each a recording session of the final address of the information volume recorded last. Once step S122 has been terminated, at step S123 the lead-out signal is read out and the Table of Contents included in the subcode channel of the lead-out signal and available at the subcode outputs of the EFM demodulator 85 is written by the control unit 83 and stored in a memory. Subsequently, when step S124 is executed, the files are recorded in the program area PA. Then the begin and end addresses of the recorded files are stored in a memory. The files having been recorded in the program area, at step S125 the Table of Contents for the newly recorded information volume is assembled and, subsequently, during the execution of step S126, recorded in the lead-in area of the information volume concerned. Subsequently, at step S127 the lead-out signal is recorded in the lead-out area LO of the information volume concerned, while the control information corresponding to the contents of the Tables of Contents stored in the memory as well as the newly assembled Table of Contents are applied to the subcode input of the EFM modulator 77. In the case where at step S121 it is established that no information volume has been recorded on the record carrier, step S121 is followed by step S124. This means that no Table of Contents is recorded and stored in the memory so that, when step S127 is executed, only the Table of Contents assembled for the recorded information volume is applied to the EFM modulator while the lead-out signal is being recorded.

It should be observed that it may be useful not to record control information in the lead-out signal of the first recorded information volume so as to avoid any problems that might occur when the information volumes recorded in CD-format and Tables of Contents are read from the lead-out signal by already existing CD reading devices. This is not an essential restriction, because the lead-in signal (including a Table of Contents) of the information volume recorded first on a predetermined position on the record carrier has been recorded and can always be found back in a simple manner.

Figure 10 shows a suitable partitioning for recording digitized picture information in the so-called PHOTO-CD format. In this drawing Figure the spiral-shaped track on the record carrier is diagrammatically shown as one elongated track 100 in which the beginning of the track is referenced ri and the end of the track is referenced ro. The information volumes successively recorded in a track 100 are referenced VOL1, ..., VOL4. Each information volume comprises a lead-in area LI in which a Table of Contents is recorded. The lead-in area is followed by a program area in which data files are recorded. These data files contain data files IP1, ....IPn storing the digitized pictures are stored, an overview file OV storing a low-resolution representation for each of the pictures contained in the picture files, an index file IT containing address information about the picture files and the overview file, a PVD file (Primary Volume Descriptor) describing the file structure according to ISO9660 standard and control files BB. The control files BB comprise, for example, control files for the reading of the record carrier by means of a CD-I and a CD-ROM XA player. These files may comprise the so-called "Directory" files, a "path" Table and files containing application programs. For a detailed description of the PVD and BB files reference be made to "Compact Disc Interactive Full Functional Specification", published by NV PHILIPS and SONY Corporation. For a detailed description of the files IT, IP and OV reference be made to aforementioned patent application NL-A-9002108 (PHN 13.466).

The recording of information volumes is preferably effected in such a manner that the files IT, PVD and OV contain information not only relating to the information volume they form part of, but also to all relevant information about all previously recorded information volumes, whereas the Table of Contents in the lead-in area LI exclusively relates to the information volume it forms part of. Furthermore, the files IT and PVD are to be recorded at fixed positions relative to the beginning of the program area PA so that these files essential to the read out control are easy to detect. If the Table of Contents and other essential control information is included in the program area PA as described hereinbefore, this information can be found in a rapid manner if the lead-out signal recorded in the lead-out area LO includes an address that refers to the files in which the Table of Contents and other essential control information is recorded in the relevant information volume.

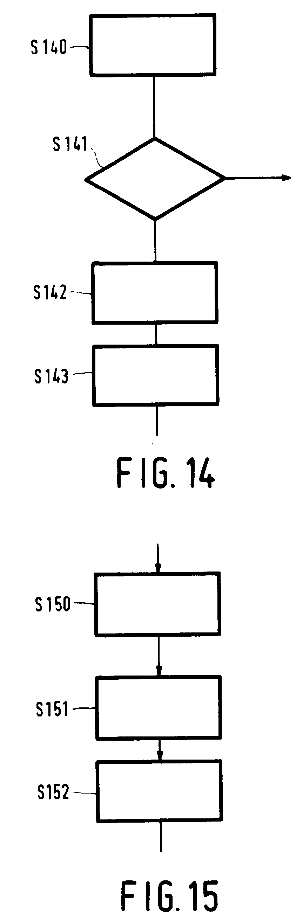

Figure 13 shows an embodiment of a suitable control program for an external control unit 110 for the case where the picture information is recorded according to the afore-described PHOTO-CD format. At step S130 of this program the read-write device 69 is supplied in a customary fashion with a read command for reading from the record carrier 70 the control files essential for the read control. The control unit 83 in the device 69 is loaded with a control program which executes a step S140 (cf Figure 14) in response to this read command, at which step the track section is searched for which is intended to accommodate the lead-in signal of the first information volume. Subsequently, at step S141, on the basis of any available information in this section, it is established whether the record carrier concerned is still completely unrecorded. If it is, a message will be sent to the external control unit 110 through a control output 89, which indicates that the available record carrier is still unrecorded. If it is not, the program is further executed with step S142 at which the lead-out signal of the last recorded information volume is searched for and read out. At that step the reference information included in the lead-out signal and made available at the subcode outputs of the EFM demodulator 85 are recorded by the control unit 83. Then, at step S143, the files essential for controlling the reading operation and denoted by this reference information, are read out and applied to the external control unit 110 *via* the output 87. While the afore-described program is being executed by the control unit 83, the program in control unit 110 is continued with step S131 at which it is established on the basis of the signals supplied by the device 69 *via* its outputs 87 and 89 whether the record carrier 70 present in the device 69 is still unrecorded. If it is not, the files read out by the device 69 are stored in a memory of the control unit 110 when step S133 is executed. Subsequently, the program is continued with step S134 at which the files for the new information volume are assembled and applied to the device 69 simultaneously with the required control commands so as to be recorded. Once all the files assembled by the control unit 110 have been applied to the device 69, step S135 is executed at which the control unit 110 sends out to the control unit 83 of device 69 a control message indicating that all the files to be recorded have been transferred. The control unit 83 has a program that is executed in response of this message. A flow chart of this program will be shown in Figure 15. This program comprises a step S150 at which the Table of Contents for the information volume concerned is assembled on the basis of address data of files recorded in the information volume which have been stored in a memory in a customary fashion. Subsequently, at step S151, the Table of Contents thus assembled is recorded in the lead-in area of the associated information volume. At step S152 the lead-out signal is recorded while reference information referring to the addresses of the files by means of the control data essential to the reading operation is included in the lead-out signal. If these files are recorded at fixed positions relative to the beginning of the program area, the address of the beginning of the program area PA can be used as reference information.

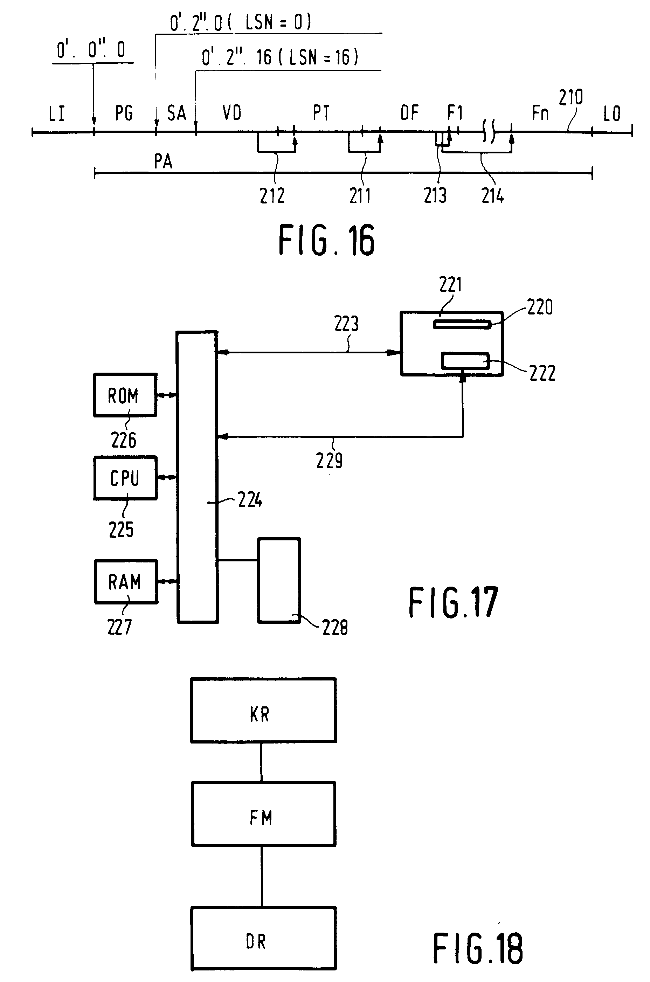

Before discussing another embodiment of the invention in detail, first a prior-art CD-ROM system will be briefly described with reference to the drawing Figs. 16 to 18. A CD-ROM system comprises an optically readable disc on which information is recorded according to the CD-ROM standard as described in the ISO 9660 standard and a CD-ROM reading apparatus for reading the disc. The information recorded on the disc comprises main information and sub-code information. The sub-code information is subdivided into sub-code frames. The main information is subdivided in so-called sectors having a length corresponding to that of a sub-code frame of the sub-code information. Fig. 16 diagrammatically shows the layout of a track 210 of a CD-ROM disc. The track comprises a so-called lead-in referenced LI, a program area referenced PA and a lead-out referenced LO. The combination consisting of the lead-in LI, the program area PA and the lead-out LO form the information volume. The program area PA is intended for storing user information. The main information in the program area PA is subdivided into so-called sectors having a length corresponding to that of a sub-code frame. Each of the sub-code frames in the program area PA comprises an absolute time code denoting the position at which the sub-code frame concerned is recorded relative to the beginning of a program area PA. The sectors also have absolute time codes corresponding to the absolute time code in the sub-code frame recorded together with the sector. The program area PA comprises a so-called pregap referenced PG in which no main information is recorded and which can be used for synchronizing the readout. The pregap PG extends over a length referenced by the absolute time codes 0'.0".0 to 0'.2".0. The pregap is followed by a so-called system area reserved for use by the system. The system area extending from 0'.2".0 to 0'.2".16 is referenced by the letters SA. This system area SA is followed by a so-called volume descriptor referenced VD commencing at 0'.2".16 on each CD-ROM disc. The length of the volume descriptor VD is not fixed but depends on the selected use of the CD-ROM.

The volume descriptor VD, however, does comprise information about its length and is furthermore terminated by a code pattern denoting the end of the volume descriptor VD. The program area PA further includes a so-called path table referenced PT, one or more so-called directory files referenced DF and user files referenced F1, ..., Fn. The path table PT comprises information about the directory structure of the information stored on the disc. The path table further includes references to sector addresses of the directory files DF. In Fig. 16 the reference to the begin address of the directory file DF is denoted by line 211. The volume descriptor VD comprises a reference denoted by line 212 to the address of the sector in which the path table PT is stored. The directory files comprise information about the structure of the user files stored in the directory concerned and references denoted by the lines 213 and 214 to the addresses of the sectors in which the user files of the directory concerned are stored. The path table and directory file comprise the control information necessary for searching for the user files F1, ..., Fn.

Fig. 17 diagrammatically shows a CD-ROM reading apparatus for reading a CD-ROM disc 20. The CD-ROM reading apparatus comprises a CD player 221 of which an output is coupled to a system bus 224 of a customary computer system for delivering the read information over a data signal path 223. Furthermore, a central processor 225, a ROM 226, a RAM 227 and one or more information reproducing devices 228 are connected to the system bus 224.

The CD player 221 comprises a control unit 222 for searching for information on the basis of sector addresses received over the control signal path 229. The control signal path 229 is also connected to the system bus 224.

Software for the central processor 225 is loaded in the ROM 226. This software customarily comprises a so-called operating system. It is a task of the operating system, for example, to control and monitor the data transport between the elements of the equipment connected to the system bus.

Fig. 18 diagrammatically shows the structure of a customary operating system such as, for example, the OS9 operating system. Such an operating system comprises a kernel referenced KR, file managers referenced FM and device drivers referenced DR. In the case where information is desirably read from the files present on the disc, the kernel will send an I/O request to the file manager FM. On the basis of the received I/O request the file manager decides which sectors are to be read out and indicates to the device driver, by means of a logic sector number LSN, which sectors of the disc are to be read out. The logic sector number does not match the absolute time codes in the sectors on the disc 220. However, there is a fixed relation between the logic sector numbers LSN and the absolute time codes. This relation is the following: LSN = (((MIN*60)+SEC)*75+FR) for the absolute time code MIN'.SEC".FR. This means that the first sector of the signal area SA is denoted LSN = 0 and the first sector of the volume descriptor VD is denoted LSN = 16.
On the basis of the received logic sector numbers LSN the device driver derives the necessary control signals for the control unit 222 which unit searches for the desired sector and reads same in response to these control signals.

Before access can be gained to a requested user file, for example, file F1, the information in the volume descriptor VD, the path table PT and the directory file DF must have been read out. This reading operation takes place during the log-on procedure and/or in reaction to I/O requests made to this effect by the kernel. During this operation the file manager sends the corresponding logic sector numbers LSN to the device driver.

In the CD-ROM system described above, information extended at a later instant to the information already recorded cannot be read out. Until recently this was no objection because all CD-ROM discs were of the read-only type, so that it was impossible to add information to the disc afterwards. However, recording apparatuses have meanwhile been developed in which it is possible to record information according a CD format on a write once disc. Such a disc can also be read out by CD-ROM reading apparatuses. With the afore-mentioned recording apparatus it is possible to record information next to the already recorded information volume at a later instant. However, this information cannot be accessed by the existing CD-ROM reading systems because the necessary information cannot be included in the path table and directory files due to the fact that the record carrier is of the write-once type.

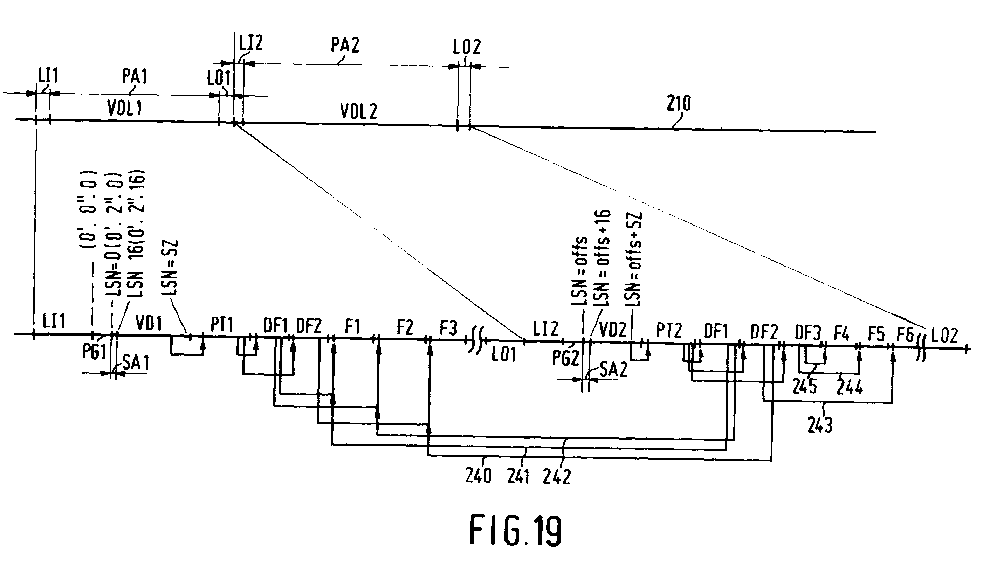

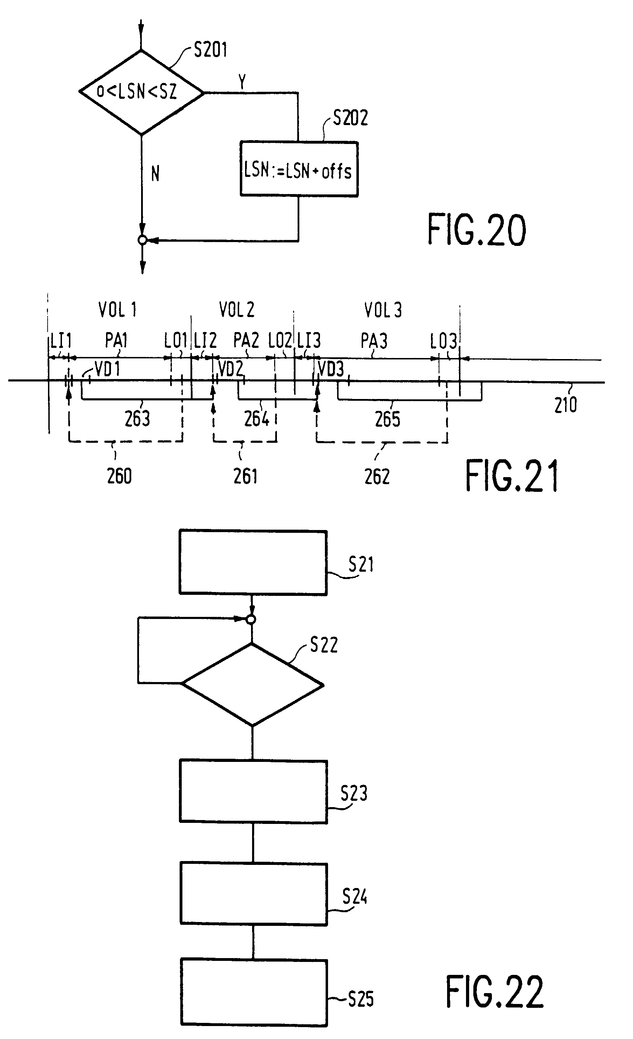

With reference to Figs. 19 and 20 embodiments for a reading apparatus and a record carrier will be described with which the afore-mentioned objections can be met.

Fig. 19 diagrammatically shows the layout of the track 210 on the disc 220. This track comprises a first information volume VOL1, comprising a lead-in LI1, a program area PA1 and a lead-out LO1, recorded in the same fashion as described with reference to Fig. 16. Contiguous to the information volume VOL1 a second information volume VOL2 is recorded at a later instant. This second information volume VOL2 also comprises a lead-in referenced LI2, a program area referenced PA2 and a lead-out referenced LO2. The information in the program area PA2 is arranged in similar fashion to the information in the program area PA1. That is to say, that a system area SA2 and a volume descriptor VD2 are located at a predetermined distance from the beginning of the program area. In Fig. 19 the beginning of the system area SA2 is denoted by the logic sector number LSN = offs. The beginning of the volume descriptor VD2 is denoted by logic sector number LSN = offs+16. The end of the volume descriptor VD2 is denoted by the logic sector number LSN = offs+SZ. The volume descriptor VD2 has the same format as the volume descriptor VD1 in the first information volume. The volume descriptor VD2, however, may have a length different from the volume descriptor VD1. For that matter, as laid down in the ISO 9660 standard, the volume descriptor may comprise an arbitrary number of supplementary volume descriptors in addition to the primary volume descriptor. It is not necessary for the number of supplementary volume descriptors for the VD1 and VD2 volume descriptors to be equal. However, it is preferred that the length of VD2 does not exceed that of VD1. The reason for this will be further explained in this description. The volume descriptor VD2 comprises a reference to the sector address of a path table PT2 included in the program area PA2. The path table comprises information about the structure of the directories that include all the user files referenced F1, ..., F6 the first and second information volumes. Furthermore, the path table PT2 comprises references to directory files. These directory files comprise information about the structure of the user files included in the directory concerned and the references to the addresses of these user files. The latter references are denoted in the Figure 19 by the reference numerals 240, 241 and 242. In the embodiment for the layout of the disc shown in Fig. 19 the volume descriptor comprises a reference to the path table and the directory files with the information necessary for accessing all user files F1, ..., F6 in both the information volume VOL1 and VOL2.

Generally, path table and directory files will all be included in the last-recorded information volume. In principle, however, it is alternatively possible for this information to be recorded partly or in full in sectors not included in this information volume. It is only essential for the information volume to comprise the reference to the necessary information. Further information volumes may still be recorded contiguous to the information volume VOL2. If this is effected, always the last-recorded information volume is then to include a volume descriptor comprising a reference to a path table which contains information about the directory structure and references to the directory files for all user files in the information volume concerned and at least part of, but preferably all, previously recorded information volumes.

Fig. 20 shows a modification in the device driver of the operating system through which access is gained to all the user files in all the information volumes. The modification comprises a detection step S201 for detecting whether the logic sector number LSN received from the file manager is located in the range 0-SZ. This range includes the sector addresses of the volume descriptor VD1 in the first information volume VOL1. If the received logic sector number LSN is located in said range, step S202 is executed. In this step the received logic sector number is modified by adding thereto the value of offs. This entails that when there is a request for access to volume descriptor VD1 access is gained to volume descriptor VD2 *in lieu of* volume descriptor VD1. Through the volume descriptor VD2 access is gained to all the required information present in the path table PT2 and the directory files DF1', DF2' and DF3 for searching for all the user files in both information volume VOL2 and VOL1, so that all the user information on the disc is accessible.

For adequately modifying the logic sector numbers, the values of offs and SZ are to be known in the device driver.

The disc is to comprise a reference to the sector addresses of the volume descriptor in the lead-out LO of an information volume recorded later on. This may be effected, for example, by including a reference to the sector address of the beginning of the system area SA in the lead-out sub-code information of each subsequently recorded information volume.

Fig. 21 shows by way of illustration a layout of the track 210 in which three information volumes VOL1, VOL2 and VOL3 are recorded. The references to the sector addresses of the volume descriptors VD1, VD2 and VD3 in the lead-outs LO1, LO2 and LO3 of the corresponding information volumes are denoted by the lines 260, 261 and 262. The lead-out LO is situated at the end of the information volume. The lead-out of the last-recorded information volume may be found back by searching for the transition from the track portion in which information is recorded to a track portion in which no information has yet been recorded as has already been described in this patent application.

A flow chart of an embodiment for a suitable detection control program is shown in Fig. 22. This program comprises a step S21 in which the drive unit 83 moves the read head 40 radially along the record carrier 201 from the beginning of the track under the control of the control unit 43. In step S22 in response to the output signal of the detection circuit 42 there is detected whether information had been recorded in the sector of the disc 221 detected by the read head. Once the output signal of the detection circuit 42 denotes that no further information has been recorded any more in the detected sector, the displacement of the read head 40 is stopped in step S23 and the read head is moved in opposite direction to about the beginning of the lead-out of the last-recorded information volume. Subsequently, when step S24 is executed, the reference information included in the lead-outs LO is read out. This reference information denotes the value of offs. Then, when step S25 is executed, the volume descriptor denoted by the read reference information is searched for and the value of SZ is determined when this volume descriptor is read out. This value may be determined, for example, by means of the information about the length of the volume descriptor included in the volume descriptor. Alternatively, it is possible, to detect the end of the volume descriptor by detecting the so-called volume descriptor set terminator situated at the end of the volume descriptor.

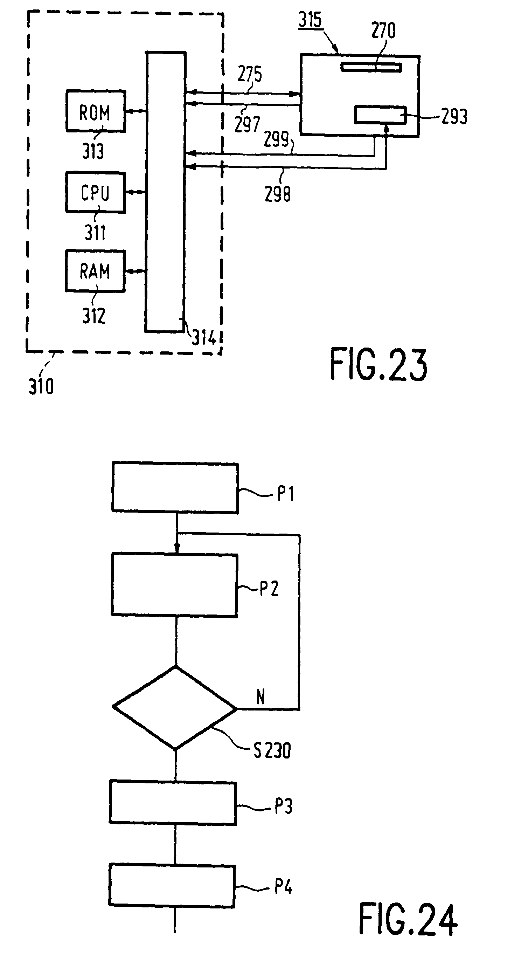

Fig. 23 diagrammatically shows an embodiment for a recording apparatus according to the invention. The recording apparatus comprises a computer system 310 of a customary type, with a central processor 311, a RAM 312 and a ROM 313. The central processor 311, the RAM 312 and the ROM 313 are connected to a system bus 314 for mutual data transport. The recording apparatus further includes a write unit for writing information on a disc 270 of a write-once type. The write unit 315 is connected to the system bus 314 over data signal paths 275 and 297 for receiving information to be recorded and supplying information that has been read out. The write unit 315 comprises a control unit 293 for controlling the writing operation. The control unit is connected to the system bus 314 over the control signal paths 298 and 299 for the exchange of control commands and control data between the control unit 293 and the computer system 310.

Fig. 24 shows a flow chart of a program available in the computer system 110 for recording a next information volume. This program comprises a procedure P1 in which the computer system applies control commands to the control unit over the control signal path 98 for reading the volume descriptor, the path table and the directory files from the last-recorded information volume. This read information is copied to the RAM 312. Procedure P1 is followed by procedure P2. In procedure P2 new user files are created in a customary fashion and formatted and temporarily stored in the RAM 312. In addition, the path table and directory files are extended by information about the newly created user files. Then, in procedure P3, the newly created user files are recorded in a so-called track on the disc 70. In step S230 it is verified whether more tracks in the information volume are to be recorded. If there are, step S230 is followed by procedure P1. If there are not, procedure P3 is executed in which the modified volume descriptor, path table and file directories are recorded on the disc 70. Subsequently, during the execution of procedure P4 the lead-in information is recorded in the lead-in and the lead-out information in the lead-out of the relevant information volume.

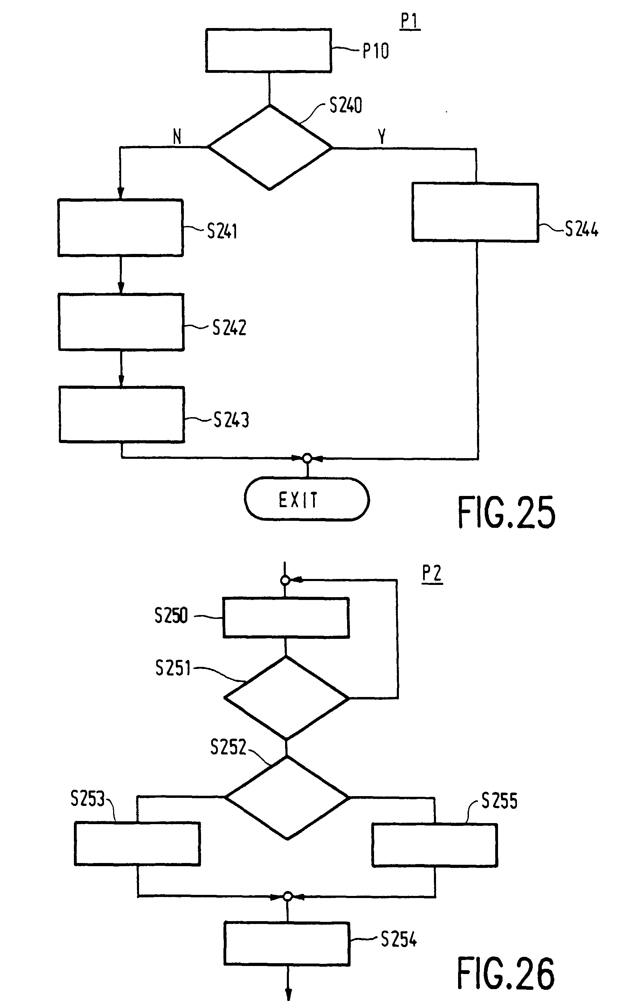

Fig. 25 shows a flow chart of an embodiment for the procedure P1. The procedure P1 is initiated by executing procedure P10 in which the value of offs is determined as is done, for example, by the steps S221 to S225 as shown in Fig. 22. This is possible, for example, by verifying, while the procedure P10 is being executed, whether information is already present on the disc 70 and, subsequently, locate a flag indicating that the disc 70 is still unrecorded. If it is established, during the execution of step S240, that information volumes have already been recorded on the disc 70, the volume descriptor denoted by the value of offs is read out in step S241 and the contents are copied to the RAM 312.

Subsequently, when step S242 is executed, the logic sector number of the path table is determined on the basis of the read volume descriptor and the path table is read out. The contents of the read-out path table are copied to the RAM 312. Furthermore, in step S243, the logic sector numbers of the directory files are determined on the basis of the read-out path table and these directory files are read out. The contents of the directory files are again copied to the RAM 312. Once step S243 has been executed, the procedure P1 is terminated.

In the case where it is established in step S240 that the disc 70 is still completely blank, this step is followed step S244 in which a new volume descriptor is created and stored in the RAM 312.

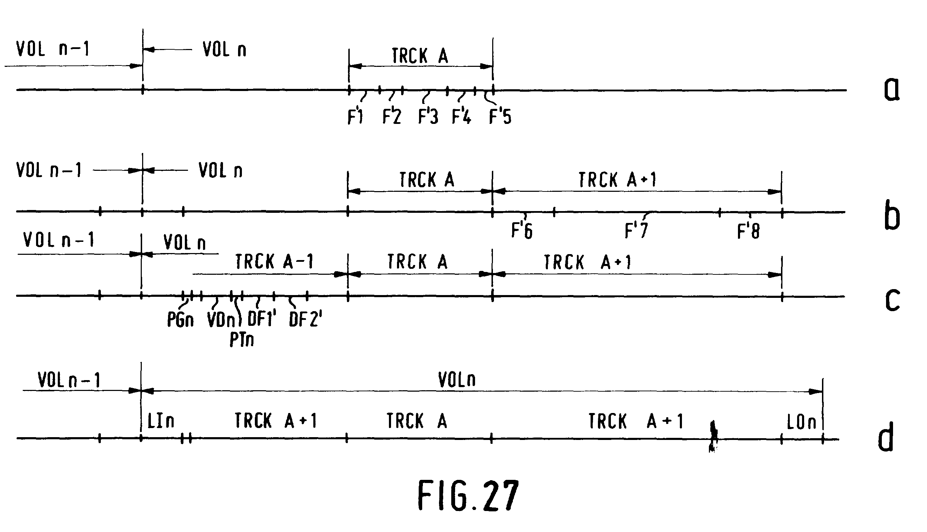

Fig. 26 shows a flow chart of an embodiment for the procedure P2. This procedure comprises a step S250 in which a user file is created and formatted and stored in the RAM 312 in a customary fashion. Subsequently, in step S251, it is verified whether a next user file is to be added to the track to be created. If so, step S250 is executed once more. If not, step S252 is executed in which it is verified whether one or more tracks of the information volume to be recorded have actually been recorded. If no track has yet been recorded for the relevant information volume, step S253 is executed. In this step the user files stored in the RAM 312 are recorded. These user files are recorded as a single track. The recording is initiated in a sector which is located at a specific distance from the end of the previous information volume. This distance is to be selected sufficiently large for introducing a lead-in LI between the end of the last-recorded information volume and the beginning of the newly recorded track, and for introducing a volume descriptor, a path table and directory files. Fig. 27a shows by way of illustration the position of the first-recorded track of a new information volume. In this drawing Figure the last fully recorded information volume is referenced VOLn-1. The first-recorded track of the new information volume to be recorded VOLn is denoted TRCK A. This track comprises the user files F1', F2', F3', F4' and F5'.

Once track TRCK A has been recorded, the copies of the path table and directory files present in the RAM 312 are modified by means of the data of the newly recorded user files F1', ..., F5' during the execution of step S54.

After step S354 has been executed, the procedure P2 is terminated.

When the procedure P2 is executed once more, it will be established when step S252 is being executed that a track of the information volume to be recorded VOLn has actually been recorded. In that case step S252 is followed by step S255 in which the next track is recorded adjoining the already recorded track TRCK A. Fig. 27b shows this next track is referenced TRCK A+1. This track again comprises one or more user files referenced F6', F7' and F8'. Once the step S255 has been executed, step S254 is again executed in which the copies of the path table and directory files are modified by information about the user files recorded in the track TRCK A+1. After step S254 has been executed, the procedure P2 is again terminated. If no further user files need to be recorded in the tracks, procedure P3 will be started subsequent to procedure P2. In this procedure the volume descriptor, the path table and the directory files will be recorded in a track TRCK A-1 between the end of the last-recorded information volume VOLn-1 and the beginning of the first track (TRCK A) with user files in the new information volume to be recorded VOLn.

Before commencing recording track TRCK A-1, the sector addresses of the sectors of track TRCK A-1 are determined in which the volume descriptor, the path table and the directory files are to be recorded, and the reference information in the volume descriptor and path table is to be modified in accordance with these sector addresses.

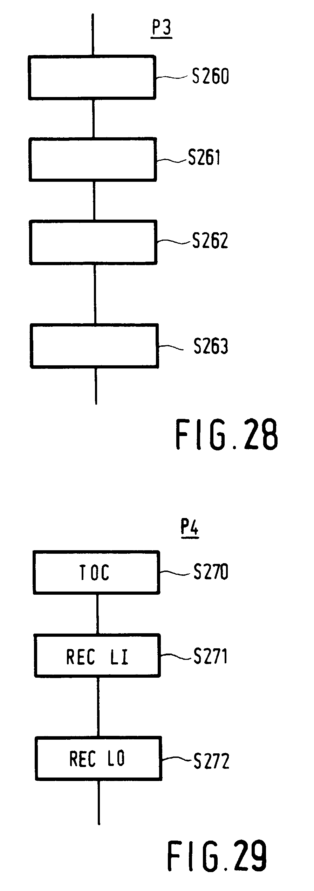

Fig. 28 shows a flow chart of an embodiment for procedure P3. This procedure is commenced by a step S260 in which the logic sector number of the first sector of the volume descriptor is determined on the basis of information which denotes the logic sector number of the last sector in the lead-out of the last-recorded information volume. Subsequently, in step S261, the logic sector numbers of the first sectors of the path table and the directory files are determined on the basis of the logic sector number on the first sector of the volume descriptor and the size of the volume descriptor, path table and directory files. Then, in step S262, the reference information in the volume descriptor and the path table to the beginning of the path table and the directory files respectively, is modified. The volume descriptor may comprise, as required, a reference to the sector intended for the recording of the volume descriptor of the information volume to be recorded next. After step S262 step S263 is executed. In this step the pregap preceding the track TRCK A-1 and track TRCK A-1 itself are recorded during the recording session. The recording is preferably such that the track TRCK A-1 is continued to the beginning of track TRCK A. The track portion between the last directory file and the beginning of track TRCK A may be filled by sectors having dummy information, for example, sectors having only "0"-bits. Once step S263 has been executed, the procedure P3 is terminated and procedure P4 is commenced.

Fig. 29 shows a flow chart of an embodiment for the procedure P4. The procedure comprises a first step S270 in which a so-called Table of Contents according to the format prescribed by the CD standard is assembled from the initial addresses of the tracks included in the information volume. Subsequently, there is step S271 in which information is recorded in the lead-in LIn (see Fig. 27d) while the Table of Contents is included in the sub-code of the recorded information. Then, in step S272, the lead-out information is recorded in the lead-out LOn. A reference to the initial address of the volume descriptor included in the information volume may then be included as required. After the information has been recorded in the lead-in and the lead-out, the recording of the information volume has been terminated and the disc 70 is suitable to read by means of the reading apparatus according to the invention.

The above describes an apparatus and method in which the information volume comprises a number of tracks to be recorded in a number of separate recording sessions. Needless to observe that it is alternatively possible to have all information to be included in the information volume ready in a memory and then record the complete information volume in a single recording session.

In the foregoing the volume descriptor for the information volume to be recorded next is obtained by adapting the volume descriptor read out from the last-recorded information volume. Alternatively, it is possible to assemble this volume descriptor each time anew.

It is only important that each new volume descriptor comprise a reference to files where the information necessary for controlling the search operation is available. The information referred to by the volume descriptor need not necessarily be recorded in the same information volume as the one in which the volume descriptor occurs.

The embodiments described with reference to the drawing Figures 16 to 29 relate to the recording of information formatted according to the CD-ROM standard. However, the invention is not restricted to recording this type of information. Furthermore, the invention may be applied to each recording of information volumes in which control information for information search included in the information volumes is included in each information volume.

Finally, it should be observed that the invention is pre-eminently suitable for recording and reading information on/from write-once record carriers. The use of the invention, however, is not restricted to this. It may also be applied to recording and reading information on/from record carriers of the rewritable type.

## Claims

1. Method of recording information in a partly recorded track on a record carrier of an inscribable type on which the information is to be arranged in an information volume (VOL1) comprising control information on a predetermined position relative to the start of the information volume for controlling the reading operation of the recorded information and a lead-out signal (LO1) denoting the end of the information volume, characterized in that the information is recorded in at least one further information volume (VOL2) following the lead-out signal of a recorded information volume (VOL1), which further information volume (VOL2) comprises further control information on a further predetermined position relative to the start of the further information volume for controlling the reading operation of the further information volume and a further lead-out signal (LO2) denoting the end of the further information volume, and in that additional control information for also controlling the reading operation of the further information volume (VOL2) is included in the further lead-out signal for providing a second access to the recorded information, **which additional control information comprises reference information (261) indicative of the further predetermined position.**

2. Method as claimed in Claim 1, characterized in that an offset value (offs) indicative of the difference between the further predetermined position and the corresponding predetermined position in the first information volume (VOL1) is included in the reference information (261).

3. Method as claimed in Claim 1, characterized in that a volume descriptor (VD2) referring to control information (PT) for file searching is included in the further control information at a predetermined address in the information volume, and in that the reference information (261) refers to the predetermined address in the associated information volume (VOL2).

4. Method as claimed in Claim 1, characterized in that the further control information relates to all previously recorded information volumes (VOL1) in addition to the associated information volume (VOL2).

5. Method as claimed in Claim 1, characterized in that the additional control information in each further lead-out signal contains a Table of Contents of all previous information volumes.

6. Device for recording information in a partly recorded track of a record carrier (1) of an inscribable type on which the information is to be arranged in an information volume comprising control information on a predetermined position relative to the start of the information volume for controlling the reading operation of the recorded information and a lead-out signal denoting the end of the information volume, which device has an input (3) for receiving information signals, comprises lead-out signal generating means (6) for generating the lead-out signal and recording means (2,4,5,8) for realizing a recording of the information signal and the lead-out signal, characterized in that the device comprises search means (8,9) for searching the lead-out signal of the information volume recorded last, and in that the recording means (2,4,5,8) are arranged for recording a further information volume (VOL2) following the searched lead-out signal, which further information volume comprises further control information on a further predetermined position relative to the start of the further information volume for controlling the reading operation of the further information volume and a further lead-out signal (LO2) denoting the end of the further information volume, and in that the lead-out signal generating means (6) comprise means (S3) for inserting additional control information (261) in the further lead-out signal for also controlling the reading operation of the further information volume for providing a second access to the recorded information, **which additional control information comprises reference information (261) indicative of the further predetermined position.**

7. Device as claimed in Claim 6, characterized in that the reference information (261) comprises an offset value (offs) indicative of the difference between the further predetermined position and the corresponding predetermined position in the first information volume (VOL1).

8. Device as claimed in Claim 6, characterized in that the recording device is arranged for recording the information volumes in essentially concentric tracks situated on a disc-shaped record carrier (1), the device comprising a drive motor for driving the record carrier in a rotating fashion, and the recording means comprising a write head (2) displaceable in radial direction relative to the record carrier by means of a radial drive unit, and this write head comprising a detector for detecting information recorded in the track, while the search means comprise control means (8) for effecting a radial displacement of the write head and detection means for detecting (9), in response to an output signal from the detector, whether information has been recorded in the track part opposite the write head.

9. Device for reading a record carrier (1) of a type on which information has been arranged in an information volume (VOL1) comprising control information on a predetermined position relative to the start of the information volume and a lead-out signal (LO1) denoting the end of the information volume, which device comprises locating means (43) for locating the start of the information volume, reading means (40) for reading information recorded in the track and control means (43) for controlling the reading operation on the basis of the control information, characterized in that, while on the record carrier (1) at least one further information volume (VOL2) comprising control information on a further predetermined position relative to the start of the further information volume and a further lead-out signal (LO2) denoting the end of the further information volume has been recorded following the lead-out signal, the further lead-out signal comprising additional control information (261) **for providing a second access to the recorded information, which additional control information comprises reference information (261) indicative of the further predetermined position,** the device comprises search means (42,43) for finding the further lead-out signal of the further information volume recorded last and means (S13) for reading the additional control information, and in that the control means (43) are arranged for **reading the further control information from the further predetermined position based on the reference information.**

10. Device as claimed in Claim 9, characterized in that the device comprises a drive unit (41) for driving a disc-shaped record carrier (1) in a rotating fashion, on which record carrier the information volumes are recorded in substantially concentric track sections and in which the reading means comprise a read head (40) which is displaceable in radial direction relative to the record carrier by means of a radial drive unit (41), and which read head comprises a detector for detecting information recorded in the track, while the search means comprise control means (43) for effecting a radial displacement of the read head and detection means (42) for detecting, on the basis of an output signal of the detector, whether information has been recorded in the track section opposite the read head.

11. Record carrier on which an information volume (VOL1) has been recorded in a track, which information volume comprises control information on a predetermined position relative to the start of the information volume for controlling the reading operation of the recorded information and a lead-out signal (LO1) denoting the end of the information volume, characterized in that at least one further information volume (VOL2) has been recorded following the lead-out signal (LO1), said further information volume comprising further control information on a further predetermined position relative to the start of the further information volume for controlling the reading operation of the further information volume and a further lead-out signal (LO2) denoting the end of the further information volume, and in that the further lead-out signal comprises additional control information (261) for also controlling the reading operation of the further information volume for providing a second access to the recorded information, **which additional control information comprises reference information (261) indicative of the further predetermined position.**

12. Record carrier as claimed in Claim 11, characterized in that the reference information (261) comprises an offset value (offs) indicative of the difference between the further predetermined position and the corresponding predetermined position in the first information volume (VOL1).

13. Record carrier as claimed in Claim 11, characterized in that a volume descriptor (VD2) referring to control information (PT) for file searching is included in the further control information at a predetermined address in the information volume, and in that the reference information (261) refers to the predetermined address in the associated information volume (VOL2).

14. Record carrier as claimed in Claim 11, characterized in that the further control information relates to all previously recorded information volumes (VOL1) in addition to the associated information volume (VOL2).

15. Record carrier as claimed in Claim 11, characterized in that the additional control information in each further lead-out signal contains a Table of Contents of all previous information volumes.

16. Record carrier as claimed in Claim 11, characterized in that, while the record carrier has been recorded according to CD standards, the additional control information (261) has been included in the subcode Q-channel.

## Patentansprüche

1. Verfahren zum Aufzeichnen von Information in einer teilweise beschriebenen Spur auf einem Aufzeichnungsträger vom beschreibbaren Typ, auf dem die Information in einem Informationsvolumen (VOL1) angeordnet werden soll, das Steuerinformation auf einer zuvor bestimmten Position relativ zum Anfang des Informationsvolumens enthält, zum Steuern des Auslesevorgangs für die aufgezeichnete Information, und ein Auslaufsignal, das das Ende des Informationsvolumens angibt, dadurch gekennzeichnet, daß die Information im Anschluß an das Auslaufsignal eines aufgezeichneten Informationsvolumens (VOL1) in zumindest einem weiteren Informationsvolumen (VOL2) aufgezeichnet wird, welches weitere Informationsvolumen (VOL2) weitere Steuerinformation auf einer weiteren zuvor bestimmten Position relativ zum Anfang des weiteren Informationsvolumens umfaßt zum Steuern des Auslesevorgangs für das weitere Informationsvolumen und ein weiteres Auslaufsignal (LO2), das das Ende des weiteren Informationsvolumens angibt, und daß zusätzliche Steuerinformation zum Steuern auch des Auslesevorgangs für das weitere Informationsvolumen (VOL2) in dem weiteren Auslaufsignal enthalten ist, um einen zweiten Zugriff auf die aufgezeichnete Information zu verschaffen, welche zusätzliche Steuerinformation Verweisinformation (261) umfaßt, die eine Anzeige für die weitere zuvor bestimmte Position ist.

2. Verfahren nach Anspruch 1, dadurch gekennzeichnet, daß ein die Differenz zwischen der weiteren zuvor bestimmten Position und der entsprechenden zuvor bestimmten Position in dem ersten Informationsvolumen (VOL1) anzeigender Offsetwert (offs) in der Verweisinformation enthalten ist.

3. Verfahren nach Anspruch 1, dadurch gekennzeichnet, daß ein auf Steuerinformation (PT) zum Dateisuchen verweisender Volumendeskriptor (VD2) bei einer zuvor bestimmten Adresse in dem Informationsvolumen in der weiteren Steuerinformation enthalten ist und daß die Verweisinformation (261) auf die zuvor bestimmte Adresse in dem zugehörigen Informationsvolumen (VOL2) verweist.

4. Verfahren nach Anspruch 1, dadurch gekennzeichnet, daß sich die weitere Steuerinformation außer auf das zugehörige Informationsvolumen (VOL2) auf alle zuvor aufgezeichneten Informationsvolumen (VOL1) bezieht.

5. Verfahren nach Anspruch 1, dadurch gekennzeichnet, daß die zusätzliche Steuerinformation in jedem weiteren Auslaufsignal ein Inhaltsverzeichnis (Table of Contents) aller vorherigen Informationsvolumen enthält.

6. Einrichtung zum Aufzeichnen von Information in einer teilweise beschriebenen Spur auf einem Aufzeichnungsträger (1) vom beschreibbaren Typ, auf dem die Information in einem Informationsvolumen angeordnet werden soll, das Steuerinformation auf einer zuvor bestimmten Position relativ zum Anfang des Informationsvolumens enthält, zum Steuern des Auslesevorgangs für die aufgezeichnete Information, und ein Auslaufsignal, das das Ende des Informationsvolumens angibt, welche Einrichtung einen Eingang (3) zum Empfangen von Informationssignalen aufweist sowie Auslaufsignalgenerierungsmittel (6) zum Generieren des Auslaufsignals und Aufzeichnungsmittel (2, 4, 5, 8) zum Bewirken einer Aufzeichnung des Informationssignals und des Auslaufsignals umfaßt, dadurch gekennzeichnet, daß die Einrichtung Suchmittel (8, 9) zum Aufsuchen des Auslaufsignals des zuletzt aufgezeichneten Informationsvolumens umfaßt und daß die Aufzeichnungsmittel (2, 4, 5, 8) zum Aufzeichnen eines weiteren Informationsvolumens (VOL2) im Anschluß an das gesuchte Auslaufsignal ausgebildet sind, welch weiteres Informationsvolumen weitere Steuerinformation auf einer weiteren zuvor bestimmten Position relativ zum Anfang des weiteren Informationsvolumens umfaßt, zum Steuern des Auslesevorgangs für das weitere Informationsvolumen, und ein weiteres Auslaufsignal (LO2), das das Ende des weiteren Informationsvolumens angibt, und daß die Auslaufsignalgenerierungsmittel (6) Mittel (S3) umfassen, um zusätzliche Steuerinformation (261) in das weitere Auslaufsignal einzubringen, zum Steuern auch des Auslesevorgangs für das weitere Informationsvolumen (VOL2), um einen zweiten Zugriff auf die aufgezeichnete Information zu verschaffen, welche zusätzliche Steuerinformation Verweisinformation (261) umfaßt, die eine Anzeige für die weitere zuvor bestimmte Position ist.

7. Einrichtung nach Anspruch 6, dadurch gekennzeichnet, daß die Verweisinformation (261) einen die Differenz zwischen der weiteren zuvor bestimmten Position und der entsprechenden zuvor bestimmten Position in dem ersten Informationsvolumen (VOL1) anzeigenden Offsetwert (offs) umfaßt.

8. Einrichtung nach Anspruch 6, dadurch gekennzeichnet, daß die Aufzeichnungseinrichtung zum Aufzeichnen der Informationsvolumen in auf einem plattenförmigen Aufzeichnungsträger (1) gelegenen, im wesentlichen konzentrischen Spuren ausgebildet ist, wobei die Einrichtung einen Antriebsmotor zum Antreiben des Aufzeichnungsträgers in rotierender Weise umfaßt und die Aufzeichnungsmittel einen Schreibkopf (2) umfassen, der in radialer Richtung relativ zum Aufzeichnungsträger mittels einer radialen Antriebseinheit verlagerbar ist, und wobei dieser Schreibkopf einen Detektor zum Detektieren von in der Spur aufgezeichneter Information umfaßt, wobei die Suchmittel Steuerungsmittel (8) zum Bewirken einer radialen Verlagerung des Schreibkopfes umfassen und Detektionsmittel zum Detektieren (9), in Reaktion auf ein aus dem Detektor kommendes Ausgangssignal, ob in dem Spurabschnitt gegenüber dem Schreibkopf Information aufgezeichnet worden ist.

9. Einrichtung zum Auslesen eines Aufzeichnungsträgers (1) einer Art, auf dem Information in einem Informationsvolumen (VOL1) angeordnet ist, das Steuerinformation auf einer zuvor bestimmten Position relativ zum Anfang des Informationsvolumens enthält und ein Auslaufsignal, das das Ende des Informationsvolumens angibt, welche Einrichtung Lokalisierungsmittel (43) zum Lokalisieren des Anfangs des Informationsvolumens, Lesemittel (40) zum Lesen von in der Spur aufgezeichneter Information und Steuerungsmittel (43) zum Steuern des Auslesevorgangs auf Basis der Steuerinformation umfaßt, dadurch gekennzeichnet, daß, während auf dem Aufzeichnungsträger (1) zumindest ein weiteres Informationsvolumen (VOL2) mit weiterer Steuerinformation auf einer weiteren zuvor bestimmten Position relativ zum Anfang des weiteren Informationsvolumens und ein das Ende des weiteren Informationsvolumens angebendes weiteres Auslaufsignal (LO2) im Anschluß an das Auslaufsignal aufgezeichnet worden ist, wobei das weitere Auslaufsignal zusätzliche Steuerinformation (261) umfaßt, um einen zweiten Zugriff auf die aufgezeichnete Information zu verschaffen, welche zusätzliche Steuerinformation Verweisinformation (261) umfaßt, die eine Anzeige für die weitere zuvor bestimmte Position ist, die Einrichtung Suchmittel (42, 43) zum Auffinden des weiteren Auslaufsignals des zuletzt aufgezeichneten weiteren Informationsvolumens und Mittel (S13) zum Auslesen der zusätzlichen Steuerinformation umfaßt, und daß die Steuerungsmittel (43) zum Auslesen der weiteren Steuerinformation aus der weiteren zuvor bestimmten Position, basiert auf der Verweisinformation, ausgebildet sind.

10. Einrichtung nach Anspruch 9, dadurch gekennzeichnet, daß die Einrichtung eine Antriebseinheit (41) zum Antreiben eines plattenförmigen Aufzeichnungsträgers (1) in rotierender Weise umfaßt, auf welchem Aufzeichnungsträger die Informationsvolumen in im wesentlichen konzentrischen Spurabschnitten aufgezeichnet sind und wobei die Lesemittel einen Lesekopf (40) umfassen, der relativ zum Aufzeichnungsträger mittels einer radialen Antriebseinheit (41) in radialer Richtung verlagerbar ist, und wobei der Lesekopf einen Detektor zum Detektieren von in der Spur aufgezeichneter Information umfaßt, während die Suchmittel Steuerungsmittel (43) zum Bewirken einer radialen Verlagerung des Lesekopfes umfassen und Detektionsmittel (42) zum Detektieren, anhand eines aus dem Detektor kommenden Ausgangssignals, ob Information in dem Spurabschnitt gegenüber dem Lesekopf aufgezeichnet worden ist.

11. Aufzeichnungsträger, auf dem ein Informationsvolumen (VOL1) in einer Spur aufgezeichnet worden ist, welches Informationsvolumen Steuerinformation auf einer zuvor bestimmten Position relativ zum Anfang des Informationsvolumens zum Steuern des Auslesevorgangs für die aufgezeichnete Information umfaßt und ein Auslaufsignal (LO1), das das Ende des Informationsvolumens angibt, dadurch gekennzeichnet, daß im Anschluß an das Auslaufsignal (LO1) zumindest ein weiteres Informationsvolumen (VOL2) aufgezeichnet worden ist, welches weitere Informationsvolumen weitere Steuerinformation auf einer weiteren zuvor bestimmten Position relativ zum Anfang des weiteren Informationsvolumens umfaßt, zum Steuern des Auslesevorgangs für das weitere Informationsvolumen, und ein weiteres das Ende des weiteren Informationsvolumens angebendes Auslaufsignal (LO2), und daß das weitere Auslaufsignal zusätzliche Steuerinformation (261) zum Steuern auch des Auslesevorgangs für das weitere Informationsvolumen (VOL2) umfaßt, um einen zweiten Zugriff auf die aufgezeichnete Information zu verschaffen, welche zusätzliche Steuerinformation Verweisinformation (261) umfaßt, die eine Anzeige für die weitere zuvor bestimmte Position ist.

12. Aufzeichnungsträger nach Anspruch 11, dadurch gekennzeichnet, daß die Verweisinformation (261) einen die Differenz zwischen der weiteren zuvor bestimmten Position und der entsprechenden zuvor bestimmten Position in dem ersten Informations-volumen (VOL1) anzeigenden Offsetwert (offs) umfaßt.

13. Aufzeichnungsträger nach Anspruch 11, dadurch gekennzeichnet, daß ein auf Steuerinformation (PT) zum Dateisuchen verweisender Volumendeskriptor (VD2) bei einer zuvor bestimmten Adresse in dem Informationsvolumen in der weiteren Steuerinformation enthalten ist und daß die Verweisinformation (261) auf die zuvor bestimmte Adresse in dem zugehörigen Informationsvolumen (VOL2) verweist.

14. Aufzeichnungsträger nach Anspruch 11, dadurch gekennzeichnet, daß sich die weitere Steuerinformation außer auf das zugehörige Informationsvolumen (VOL2) auf alle zuvor aufgezeichneten Informationsvolumen (VOL1) bezieht.

15. Aufzeichnungsträger nach Anspruch 11, dadurch gekennzeichnet, daß die zusätzliche Steuerinformation in jedem weiteren Auslaufsignal ein Inhaltsverzeichnis (Table of Contents) aller vorherigen Informationsvolumen enthält.

16. Aufzeichnungsträger nach Anspruch 11, dadurch gekennzeichnet, daß, während der Aufzeichnungsträger gemäß CD-Standards aufgezeichnet worden ist, die zusätzliche Steuerinformation (261) in dem Subcode-Q-Kanal aufgenommen worden ist.

## Revendications

1. Procédé d'enregistrement d'informations dans une piste partiellement enregistrée sur un support d'enregistrement d'un type inscriptible sur laquelle les informations doivent être disposées dans un volume d'information (VOL1) comprenant des informations de commande dans une position prédéterminée par rapport au début du volume d'information en vue de commander l'opération de lecture des informations enregistrées et un signal de sortie (LO1) indiquant la fin du volume d'information, caractérisé en ce que les informations sont enregistrées dans au moins un volume d'information supplémentaire (VOL2) suivant le signal de sortie d'un volume d'information enregistré (VOL1), lequel volume d'information supplémentaire (VOL2) comprend des informations de commande supplémentaires dans une autre position prédéterminée par rapport au début du volume d'information supplémentaire en vue de commander l'opération de lecture du volume d'information supplémentaire et un autre signal de sortie (LO2) indiquant la fin du volume d'information supplémentaire, et en ce que les informations de commande supplémentaires en vue de commander également l'opération de lecture du volume d'information supplémentaire (VOL2) sont incluses dans l'autre signal de sortie afin de fournir un deuxième accès aux informations enregistrées, lesquelles informations de commande supplémentaires comprennent des informations de référence (261) indiquant l'autre position prédéterminée.

2. Procédé suivant la revendication 1, caractérisé en ce qu'une valeur de décalage (offs) indiquant la différence entre l'autre position prédéterminée et la position prédéterminée correspondante dans le premier volume d'information (VOL1) est incluse dans les informations de référence (261).

3. Procédé suivant la revendication 1, caractérisé en ce qu'un descripteur de volume (VD2) se rapportant aux informations de commande (PT) pour la recherche de fichiers est inclus dans les informations de commande supplémentaires à une adresse prédéterminée dans le volume d'information, et en ce que les informations de référence (261) se rapportent à l'adresse prédéterminée dans le volume d'information connexe (VOL2).

4. Procédé suivant la revendication 1, caractérisé en ce que les informations de commande supplémentaires se rapportent à tous les volumes d'information précédemment enregistrés (VOL1) en plus du volume d'information connexe (VOL2).

5. Procédé suivant la revendication 1, caractérisé en ce que les informations de commande supplémentaires dans chaque autre signal de sortie contiennent une Table des Matières de tous les volumes d'information précédents.

6. Dispositif pour enregistrer des informations dans une piste partiellement enregistrée d'un support d'enregistrement (1) d'un type inscriptible sur laquelle les informations doivent être disposées dans un volume d'information comprenant des informations de commande dans une position prédéterminée par rapport au début du volume d'information en vue de commander l'opération de lecture des informations enregistrées et un signal de sortie indiquant la fin du volume d'information, lequel dispositif présente une entrée (3) afin de recevoir des signaux d'information, comprend des moyens de production de signaux de sortie (6) afin de générer le signal de sortie et des moyens d'enregistrement (2, 4, 5, 8) afin d'effectuer un enregistrement du signal d'information et du signal de sortie, caractérisé en ce que le dispositif comprend des moyens de recherche (8,9) pour rechercher le signal de sortie du volume d'information enregistré en dernier, et en ce que les moyens d'enregistrement (2, 4, 5, 8) sont disposés en vue de l'enregistrement d'un volume d'information supplémentaire (VOL2) suivant le signal de sortie recherché, lequel volume d'information supplémentaire comprend des informations de commande supplémentaires dans une autre position prédéterminée par rapport au début du volume d'information supplémentaire en vue de commander l'opération de lecture du volume d'information supplémentaire et un autre signal de sortie (LO2) indiquant la fin du volume d'information supplémentaire, et en ce que les moyens de production de signaux de sortie (6) comprennent des moyens (S3) pour l'introduction d'informations de commande supplémentaires (261) dans l'autre signal de sortie en vue de commander également l'opération de lecture du volume d'information supplémentaire afin de fournir un deuxième accès aux informations enregistrées, lesquelles informations de commande supplémentaires comprennent les informations de référence (261) indiquant l'autre position prédéterminée.

7. Dispositif suivant la revendication 6, caractérisé en ce que les informations de référence (261) comprennent une valeur de décalage (offs) indiquant la différence entre l'autre position prédéterminée et la position prédéterminée correspondante dans le premier volume d'information (VOL1).

8. Dispositif suivant la revendication 6, caractérisé en ce que le dispositif d'enregistrement est agencé en vue de l'enregistrement des volumes d'information dans des pistes essentiellement concentriques placées sur un support d'enregistrement en forme de disque (1), le dispositif comprenant un moteur d'entraînement pour entraîner le support d'enregistrement en rotation, et les moyens d'enregistrement comprenant une tête d'écriture (2) pouvant être déplacée dans une direction radiale par rapport au support d'enregistrement au moyen d'une unité d'entraînement radial, et cette tête d'écriture comprenant un détecteur afin de détecter les informations enregistrées dans la piste, tandis que les moyens de recherche comprennent des moyens de commande (8) afin d'effectuer un déplacement radial de la tête d'écriture et des moyens de détection afin de détecter (9), en réaction à un signal de sortie provenant du détecteur, si oui ou non des informations ont été enregistrées dans la partie de piste en face de la tête d'écriture.

9. Dispositif pour lire un support d'enregistrement (1) d'un type sur lequel des informations ont été disposées dans un volume d'information (VOL1) comprenant des informations de commande dans une position prédéterminée par rapport au début du volume d'information et un signal de sortie (LO1) indiquant la fin du volume d'information, lequel dispositif comprend des moyens de repérage (43) afin de localiser le début du volume d'information, des moyens de lecture (40) afin de lire des informations enregistrées dans la piste et des moyens de commande (43) afin de commander l'opération de lecture sur la base des informations de commande, caractérisé en ce que, tandis que sur le support d'enregistrement (1) au moins un volume d'information supplémentaire (VOL2) comprenant des informations de commande dans une autre position prédéterminée par rapport au début du volume d'information supplémentaire et un autre signal de sortie (LO2) indiquant la fin du volume d'information supplémentaire a été enregistré à la suite du signal de sortie, l'autre signal de sortie comprenant des informations de commande supplémentaires (261) afin de fournir un deuxième accès aux informations enregistrées, lesquelles informations de commande supplémentaires comprennent des informations de référence (261) indiquant l'autre position prédéterminée, le dispositif comprend des moyens de recherche (42, 43) afin de trouver l'autre signal de sortie du volume d'information supplémentaire enregistré en dernier et des moyens (S13) afin de lire les informations de commande supplémentaires, et en ce que les moyens de commande (43) sont disposés en vue de la lecture des informations de commande supplémentaires provenant de l'autre position prédéterminée sur la base des informations de référence.

10. Dispositif suivant la revendication 9, caractérisé en ce que le dispositif comprend une unité d'entraînement (41) afin d'entraîner un support d'enregistrement en forme de disque (1) en rotation, support d'enregistrement sur lequel les volumes d'information sont enregistrés dans des sections de pistes sensiblement concentriques et dans lequel les moyens de lecture comprennent une tête de lecture (40) qui peut être déplacée dans une direction radiale par rapport au support d'enregistrement afin de détecter les informations enregistrées dans la piste, tandis que les moyens de recherche comprennent des moyens de commande (43) afin d'effectuer un déplacement radial de la tête de lecture et des moyens de détection (42) afin de détecter, sur la base d'un signal de sortie du détecteur, si oui ou non des informations ont été enregistrées dans la section de piste en face de la tête de lecture.

11. Support d'enregistrement sur lequel un volume d'information (VOL1) a été enregistré dans une piste, lequel volume d'information comprend des informations de commande dans une position prédéterminée par rapport au début du volume d'information en vue de commander l'opération de lecture des informations enregistrées et un signal de sortie (LO1) indiquant la fin du volume d'information, caractérisé en ce qu'au moins un volume d'information supplémentaire (VOL2) a été enregistré à la suite du signal de sortie (LO1), ledit volume d'information supplémentaire comprenant des informations de commande supplémentaires dans une autre position prédéterminée par rapport au début du volume d'information supplémentaire en vue de commander l'opération de lecture du volume d'information supplémentaire et un autre signal de sortie (LO2) indiquant la fin du volume d'information supplémentaire, et en ce que l'autre signal de sortie comprend des informations de commande supplémentaires (261) en vue de contrôler également l'opération de lecture du volume d'information supplémentaire afin de fournir un deuxième accès aux informations enregistrées, lesquelles informations de commande supplémentaires comprennent des informations de référence (261) indiquant l'autre position prédéterminée.

12. Support d'enregistrement suivant la revendication 11, caractérisé en ce que les informations de référence (261) comprennent une valeur de décalage (offs) indiquant la différence entre l'autre position prédéterminée et la position prédéterminée correspondante dans le premier volume d'information (VOL1).

13. Support d'enregistrement suivant la revendication 11, caractérisé en ce qu'un descripteur de volume (VD2) se rapportant aux informations de commande (PT) pour la recherche de fichier est compris dans les autres informations de commande à une adresse prédéterminée dans le volume d'information, et en ce que les informations de référence (261) se rapportent à l'adresse prédéterminée dans le volume d'information connexe (VOL2).

14. Support d'enregistrement suivant la revendication 11, caractérisé en ce que les autres informations de commande se rapportent à tous les volumes d'information précédemment enregistrés (VOL1) en plus du volume d'information connexe (VOL2).

15. Support d'enregistrement suivant la revendication 11, caractérisé en ce que les autres informations de commande dans chaque autre signal de sortie contiennent une Table des Matières de tous les volumes d'information précédents.

16. Support d'enregistrement suivant la revendication 11, caractérisé en ce que, tandis que le support d'enregistrement a été enregistré selon les normes CD, les autres informations de commande (261) ont été incluses dans le canal Q de sous-code.
